# EUROPÄISCHE PATENTANMELDUNG

(11) **EP 1 734 510 A1**
(43) Veröffentlichungstag der Anmeldung: **20.12.2006**
(21) Anmeldenummer: 05300483.4
(22) Anmeldetag: 16.06.2005
(51) Int. Cl.: G10L 17/00, H04M 3/38

(54) **Durch Sprechererkennung personalisierte Telekommunikationsdienste**

(71) Anmelder: ALCATEL, 75008 Paris (FR)
(72) Erfinder: Weiss, Waldemar, D-74343, Sachsenheim (DE); Kopp, Dieter, D-75428, Illingen (DE); Rähmer, Silke, D-75428, Illingen (DE)
(74) Vertreter: Rausch, Gabriele

(57) **Zusammenfassung**

Die Erfindung betrifft ein Verfahren zur Personalisierung eines Telekommunikationsdienstes umfassend das Identifizieren eines Teilnehmers und das Konfigurieren von Dienstleistungen anhand der Identifikation, wobei das Identifizieren des Teilnehmers durch eine Kombination von CLI und eine automatische Sprechererkennung erfolgt und dass die Identifikation des Teilnehmers durch die Identifikation des erkannten Sprechers ergänzt bzw. korrigiert wird. Weiterhin umfasst die Erfindung ein Telekommunikationsdienst, eine Diensteinheit, ein Telekommunikationssystem und ein Computer Software Produkt dazu.

## Beschreibung

Die Erfindung betrifft ein Verfahren zur Personalisierung eines Telekommunikationsdienstes, eine Diensteinheit, ein Telekommunikationssystem und ein Computer Software Produkt dazu.

Spracherkennung kann im Telekommunikationsmarkt auf vielerlei Weise eingesetzt werden. Der Markt ist geprägt von der Konvergenz verschiedener Angebote in Lokal-, Drahtlos- oder Fernnetzen sowie den aufkommenden Integrated Services. Die Telekommunikationsunternehmen statten ihre Systeme inzwischen mit Sprachfunktionen aus. Was die Bereitstellung von Informationen und Diensten angeht, ist Spracherkennung mittlerweile zu einer maßgeblichen Technik avanciert.

Spracherkennung ermöglicht innovative Services. Sprachportale und personalisierte Serviceangebote fördern das Markenimage und binden Kunden. In Callcentern eingesetzt, senkt Spracherkennung die Kosten und steigert die Kundenzufriedenheit. Gute Spracherkennung beeindruckt die Anrufer, und sie sind nach Callcenter-Anfragen nicht mehr genervt, sondern zufrieden.

Sprachbasierter Nummerwahl, Unified Messaging Service und Sprachportalen lässt sich der erhöhen die Effizienz von Kommunikationsprozessen erheblich. Routineanfragen, z. B. die Abfrage eines Kartenkontos, kann der Benutzer über eine Sprachschnittstelle in Eigenregie und ganz ohne Hilfe des Callcenter-Personals durchführen.

Eine Sprecheridentifikation mittels Sprache wird in der Europäischen Patentschrift EP 1 281 210 A1 beschrieben. Eine solche Sprecheridentifikation wird in heutigen Systemen meist zur authentifizierung eines Benutzers verwendet.

Jedoch gibt es mannigfaltige andere Anwendungen, denen sich diese Erfindung widmet. Beispielsweise kann das Identifizieren einer Person dazu verwendet werden um Dienste in einem Telekommunikationssystem zu personalisieren, d.h. Dienste, oder Services, an einen speziellen Benutzer, nämlich den identifizierten Benutzer, anpassen.

In Telekommunikationsnetzen wird üblicherweise eine Anschlusskennung signalisiert, die Telefonnummer. Nun können aber verschiedene Personen den gleichen Anschluss benutzen was zu einer Mehrdeutigkeit führt, die es verhindert die Dienste zu personalisieren. Nun wird üblicherweise einer Person eine Kennung zugeordnet, jedoch ist diese Kennung nicht wirklich Benutzerabhängig. Selbst im Bereich der Informationstechnologie wo das Konzept der Personalisierung schon sehr lange verwendet wird, wie beispielsweise personalisierte Betriebssystem-Accounts oder Webseiten wird lediglich ein Datenbereich, ein so genanntes Image im erste Beispiel oder ein Cookie im zweiten, zur Personalisierung verwendet. Überlässt ein Benutzer seinen Account (Benutzerkonto) oder seinen Browser jemand anderen, so ist die Personalisierung schlicht falsch. Wie auch die Personalisierung schlicht falsch ist, wenn ein Benutzer beispielsweise sein Mobiles Telefon an jemand anderes verleiht. Sämtliche persönlichen Einstellungen wie Telefonbuch, Appearance, Preferenzes, etc. sind die des verleihenden Benutzer und nicht die des tatsächlichen Nutzers.

Diese Erfindung stellt u.a. ein Verfahren bereit diesen Mangel der Falschen Personalisierung zu beheben und somit die Personalisierung zu verbessern und ermöglicht damit mannigfaltige Mehrwertdienste wie beispielsweise persönliche Telefonbücher etc.

Das Problem wird durch ein Verfahren zur Personalisierung eines Telekommunikationsdienstes gelöst, wobei ein Telnehmer identifiziert wird und eine Dienstleistung entsprechend konfiguriert wird und wobei das Identifizieren des Teilnehmers (zusätzlich) durch eine automatische Sprechererkennung erfolgt und die ursprüngliche Identifikation des Teilnehmers durch die Identifikation des erkannten Sprechers ergänzt bzw. korrigiert wird.

Das Problem wird gleichfalls durch ein entsprechendes Telekommunikationsnetz, entsprechend durch die beanspruchten Diensteinheiten, durch ein Computer Software Produkt gelöst.

In anderen Worten besteht die Idee der Erfindung darin in einem Dialog nebenbei einen Dialogteilnehmer anhand seiner Stimme zu identifizieren und dann die Kommunikationsmittel, die so genanten Dienste oder Services, anzupassen, also zu konfigurieren, so dass die Dienste für den eigentlichen Benutzer, also den identifizierten, personalisiert werden. Bespilesweise kann die Identifikation bereits vor dem Etablieren eines Telefongesprächs, beispielsweise während einer Sprachwahl (Namedialing) erfolgen. Vorzugsweise werden dann auch Dienste konfigurier, die Präsenzinformation anderen Telekommunikationsbenutzern bereitstellen.

Konkret könnte der Telekommunikationsdinst Call Line Identification Presentation (CLIP) durch eine persöliche Kennung erweitert, z.B. dass neben der Rufnummer "123456" auch der Name "Hans Musterman" signalisiert. Damit weiß der Angerufene, dass Hans Mustermann von dem Apparat 123456 anruft. Ebenso kann ein Präsenz-Dienst die Information nutzen, dass Hans Mustermann am Apparat 123456 telefoniert: Z.B. könnten wichtige Anrufe an diesen Apparat weitergeleitet werden, so genannte Call Forwarding Dienste. Technisch gesprochen erhält jeder dem System bekannte Benutzer eine Identifikation, die es erlaubt den Benutzer als Teilnehmer zu signalisieren. Wird dann ein Benutzer aktiv, so wird anhand der Stimme seine Identifikation neben anderer Adresseninformation signalisiert und schließlich auch über entsprechende Dienste und Merkmale präsentiert.

Das hat unter anderem den wesentlichen Vorteil einer verbesserten persönlichen Kommunikation, Denn schon durch die Gesprächsanbahnung wird dem Angerufenen (verlässlichere) Information über den Anrufer bereitgestellt. Das verbessert auch den Datenschutz und die ergänzt die Privatsphäre durch Personalisierung Persönlicher Dienste wie beispielsweise Telefonbücher oder Kalendarien. Ebenso verbessert die Erfindung die Konvergenz von Mobil- und Festnetz durch die Bereitstellung erweiterter Präsenzinformation.

Diese und andere Vorteile und Ausprägungen bzw. Ausführungsbeispielen der Erfindung kann der Fachmann den folgenden Abbildungen entnehmen, wobei

Abb. 1 illustriert einen das Verfahren der Erfindung an einem ausgehenden Ruf,

Abb. 2 illustriert Optionen bei einem ausgehenden Ruf die durch das Verfahren der Erfindung ermöglicht werden,

Abb. 3 illustriert einen das Verfahren der Erfindung an einem eingehenden Ruf,

Abb. 4 und 5 illustrieren das Verfahren nach der Erfindung an einem exemplarischen Telekommunikationsdienst, eine Mail Box.

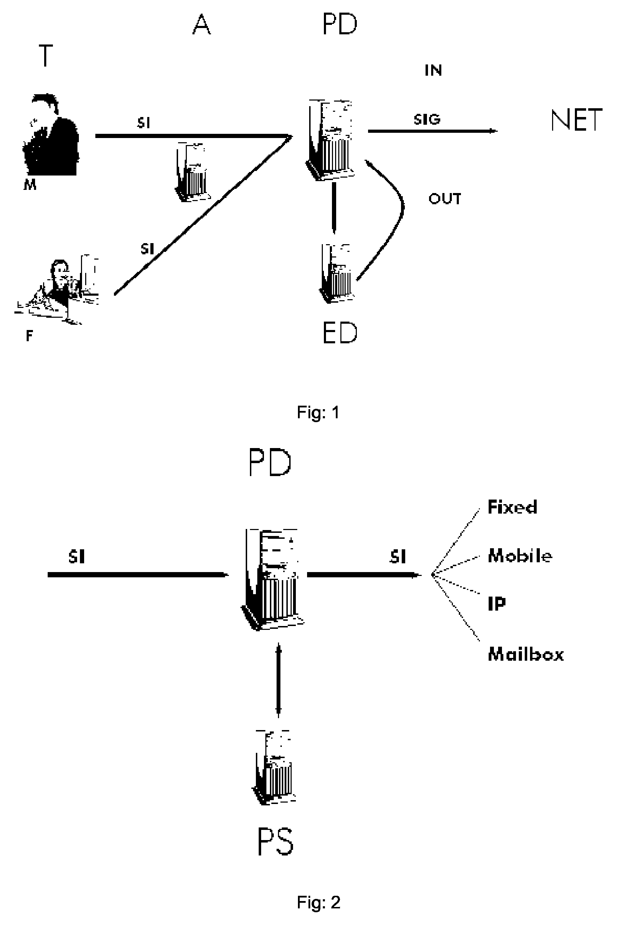

Das in Abb. 1 dargestellte Szenario zeigt einen von einem Teilnehmer T abgehenden Ruf. Es werden zwei Optionen dargestellt, ein Teilnehmer T mit einem Mobilen Gerät M, beispielsweise Global System for Mobile Communications (GSM), General Radio Packet Service (GPRS) oder Universal Mobile Telecommunication System (UMTS) o. Ä. und ein Teilnehmer mit einem Festnetzanschluss F, wie beispielsweise eine Digital Subscriber Line (DSL), einen Integrated Services Digital Network (ISDN) Anschluss o. Ä. Üblicherweise gibt es meist authentifizierende Netzwerkelemente A, die die Endgeräte und damit deren Benutzer identifizieren oder zuordnen, beispielsweise über SIM Karten, Passwörter oder einfach eine Leitung selbst. Zusätzlich zu dieser Identifikation wird noch Sprachinformation SI herangezogen um den Teilnehmer zu Identifizieren und das vorzugsweise vor dem etablieren eines Gesprächs mit einem weiteren Teilnehmer. Dies könnte zum Beispiel über Sprachwahl geschehen. Dazu ist ein personalisierter Dienst PD beispielsweise ein Telefonbuch notwendig. Ein anderer dazu alternativer personalisierter Dienst könnte die Konfiguration von einem Präsenz-Dienst oder einer Mailbox etc. Wenn der Teilnehmer T nun ein Gespräch etablieren will, wird Sprachinformation SI, beispielsweise der Name des zu rufenden Teilnehmers der Diensteinheit, die den persönlichen Dienst PD bereitstellt, gegeben. Für den Fall, dass die Sprachinformation nicht aufgelöst werden kann, z.B. weil der persönliche Dienst falsch personalisiert ist, wenn beispielsweise der Spracherkenner nicht richtig konfigurier ist, ist ein globaler Ersatzdienst ED dargestellt, der den persönlichen Dienst umkonfigurier oder fehlende Information bereitstellt wie beispielsweise ein fehlender Eintrag etc.

Der personalisierte Dienst PD, beispielsweise ein persönliches Telefonbuch vermittelt die weitere Interaktion mit dem Telekommunikationsnetzwerk NET. So könnte beispielsweise das Telefonbuch die Verbindung zu einem weiteren Teilnehmer signalisieren SIG das zusammen mit der Identifikation des rufenden Teilnehmers. Auch könnte ein solcher personalisierte Dienst weitere Dienste mit Präsenzinformation über den Identifizierten Teilnehmer versorgen, d.h. in das Telekommunikationsnetz an weitere Dienste diese Information injizieren OUT, sogenannten Managed Services konfigurieren wie beispielsweise eine Mailbox abfragen, konfigurieren oder eine Nachricht erstellen.

Der personalisierte Dienst PD, wie beispielsweise das persönliche Telefonbuch, könnte auch vom Telekommunikationsnetzwerk NET aus mit Information versorgt werden IN. Beispielsweise könnten das Rufnummernaktualisierungen oder Adressenänderungen oder neue Einträge in dem Telefonbuch sein.

Mit Abb 2 wird illustriert wie ein ausgehender Ruf von einem Präsenz-Dienst PD vermittelt werden kann. Die verbesserte verlässliche Identifikation erlaubt es einen Teilnehmerstatus zu führen, d.h. wann wer wo von wem erreicht werden kann. Abhängig von diesem Status kann ein über die Signalisierung SI identifizierter Teilnehmer an ein Festnetzanschluss, ein Mobile, an einen Internetdienst, eine Mailbox oder an eine andere Person weitergeleitet werden.

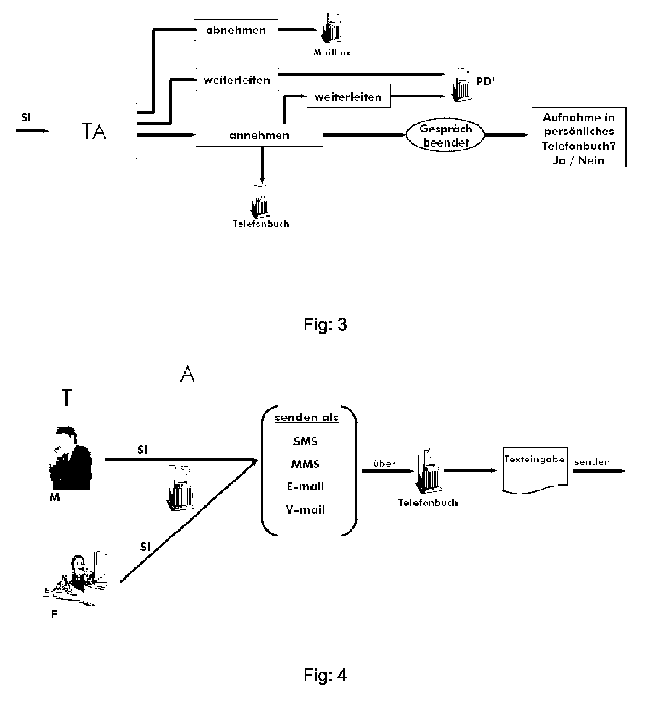

Abb. 3 illustriert die Behandlung eines ankommenden Rufs. Die Signalisierung SI kann von einem Telekommunikations-Assistenten beispielsweise dazu verwendet werden um einen Identifizierten Teilnehmer verlässlich anzukündigen. Beispielsweise könnte auf einem Ausgabegerät wie etwa einem Display oder einer Sprachausgabeeinheit die Teilnehmer-Identifikation wie Name mit gegebenenfalls weiterer Information wie Adresse, Beziehung, Bemerkungen, Rufnummer, etc. angezeigt werden. Diese Information könnte gleichzeitig zur Pflege eines lokalen Telefonbuches verwendet werden. Anhand der verlässlich Ankündigung kann der gerufene Teilnehmer dann den Anruf behandeln. In der Zeichnung sind die drei Optionen "abnehmen", d.h. den Telekommunikations-Assistenten den Ruf an eine Mailbox zu dirigieren, den Anruf weiterleiten via einen weiteren (personalisierten) Dienst, beispielsweise eines weiteren Telefonbuchs, oder den Ruf schlicht annehmen um ein Gespräch zu führen in dem der Rufende Teilnehmer gegebenenfalls auch über den weiteren Dienst PD' weitergeleitet werden kann. Ist das Gespräch beendet könnte der rufende Teilnehmer, falls noch nicht geschehen, in das persönliche Telefonbuch aufgenommen werden.

Die zur Identifizierung notwendigen Stimm- und Sprachprofile könnten während eines Dialogverlaufs erhoben und abgelegt werden.

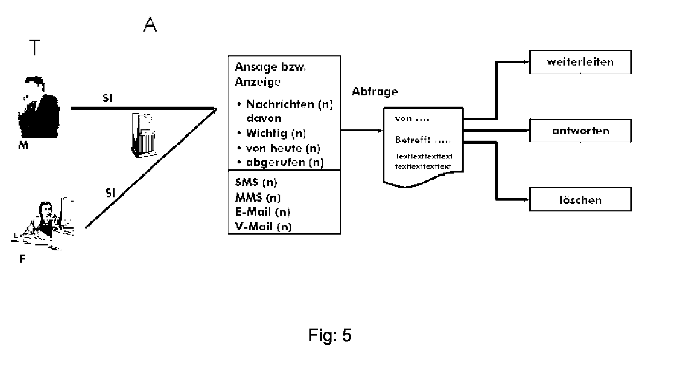

Die Spracheingabe in Verbindung mit einer Verlässlichen Identifizierung des Teilnehmers könnte in der Konfiguration wie in Abb. 1 dargestellt dazu verwendet werden eine personalisierte Benutzerschnittstelle für einen Dienst bereitzustellen. Abb. 4 und Abb. 5 zeigen dies am Beispiel einer Mailbox. In Abb. 4 legt ein Teilnehmer T Sendeoptionen sprachlich fest indem er einen Dienst SMS, MMS, E-mail, V-mail wählt und hernach eine Nachricht an einen über ein persönliches Telefonbuch adressierten weiteren Teilnehmer übermittelt.

Abb. 5 zeigt wie der Teilnehmer T an die in der Mailbox hinterlegten Nachrichten kommt. Die Authentisierung erhöht die Sicherheit der Mailbox. Die Selektion des Senders und des Themas (Subject), vorzugsweise durch Spracheingabe, kann dazu verwendet werden um weitere Optionen für Dialogfortsetzungen - weiterleiten, antworten, löschen - zu verfolgen.

Die verbesserte Identifizierung eines Teilnehmers ermöglicht eine neue Qualität der personalisierten Telekommunikation unter Verwendung eines herkömmlichen Telekommunikationsnetzes und der dort vorhandenen Dienste und das mit minimalen Anpassungen.

## Patentansprüche

1. Ein Verfahren zur Personalisierung eines Telekommunikationsdienstes (PD) umfassend das Identifizieren eines Teilnehmers (T) und das Konfigurieren von Dienstleistungen anhand der Identifikation, **dadurch gekennzeichnet dass** das Identifizieren des Teilnehmers durch eine automatische Sprechererkennung erfolgt und dass die Identifikation (SIG) des Teilnehmers durch die Identifikation des erkannten Sprechers ergänzt bzw. korrigiert wird.

2. Das Verfahren nach Anspruch 1, **dadurch gekennzeichnet dass** die Spracherkennung beiläufig durchgeführt wird, beispielsweise während eines Sprachwahlvorganges oder eines Dialoges.

3. Das Verfahren nach Anspruch 1, **dadurch gekennzeichnet dass** das Konfigurieren das Aktualisieren von Präsenzinformation des Teilnehmers umfasst.

4. Das Verfahren nach Anspruch 1, **dadurch gekennzeichnet dass** das Konfigurieren die Bereitstellung der Identifikation des Teilnehmers (T) einem zweiten Teilnehmer umfasst, beispielsweise durch einen persönlichen Klingelton oder ein Display.

5. Das Verfahren nach Anspruch 4, **dadurch gekennzeichnet dass** ein Telekommunikationsdienst des zweiten Teilnehmers ebenfalls nach dem Verfahren nach Anspruch 1 personalisiert wird.

6. Eine Diensteinheit zur Bereitstellung eines Telekommunikationsdiensts (PD),
**dadurch gekennzeichnet dass** die Diensteinheit Mittel zur Personalisierung umfasst, die es ermöglichen den Telekommunikationsdienst durch das Verfahren nach einem der vorangehenden Ansprüche zu personalisieren.

7. Eine Diensteinheit zur Personalisierung eines (oder mehrerer) Telekommunikationsdienst (PD) umfassend Mittel zum Identifizieren eines Teilnehmers und Mittel zum Konfigurieren von Dienstleistungen anhand der Identifikation, **dadurch gekennzeichnet dass** die Diensteinheit Mittel zur Sprechererkennung umfasst und so ausgestaltet ist, dass das Identifizieren des Teilnehmers durch eine automatische Sprechererkennung erfolgt und dass die Identifikation des Teilnehmers durch die Identifikation des erkannten Sprechers ergänzt bzw. korrigiert wird.

8. Ein Telekommunikationssystem **dadurch gekennzeichnet dass** das Telekommunikationssystem Diensteinheiten nach Anspruch 7 und Anspruch 8 umfasst.

9. Ein Computer Software Produkt das Programmier-Mittel zur Personalisierung eines Telekommunikationsdienstes (PD) umfasst, **dadurch gekennzeichnet, dass** die Programmier-Mittel derart ausgestaltet sind, dass sie das Verfahren nach Anspruch 1 ausführen können.
